# NEUE EUROPÄISCHE PATENTSCHRIFT

(11) **EP 0 344 647 B2**
(45) Veröffentlichungstag und Bekanntmachung des Hinweises auf die Entscheidung über den Einspruch: **28.08.1996**
(45) Hinweis auf die Patenterteilung: 13.05.1992
(21) Anmeldenummer: 89109555.6
(22) Anmeldetag: 26.05.1989
(51) Int. Cl.: A01C 5/06

(54) **Drillmaschine**
Seed drill
Semoir

(30) Priorität: 03.06.1988 DE 3818685
(43) Veröffentlichungstag der Anmeldung: 06.12.1989
(73) Patentinhaber: Amazonen-Werke H. Dreyer GmbH & Co. KG, D-49205 Hasbergen (DE)
(72) Erfinder: Grosse-Scharmann, Franz, Dr., D-2872 Hude 1 (DE)
(74) Vertreter: Grünecker, Kinkeldey, Stockmair & Schwanhäusser Anwaltssozietät

(56) Entgegenhaltungen:
- EP-A- 0 171 705
- EP-A- 0 281 802
- DE-A- 1 085 370
- DE-B- 2 726 340
- FR-A- 2 573 952

## Beschreibung

Die Erfindung betrifft eine Drillmaschine gemäß Oberbegriff des Patentanspruches 1.

Eine derartige Drillmaschine ist durch die DE-PS 27 26 340 bekannt. Bei dieser Drillmaschine sind hinter den Säscharen Zustreicher mit zwei gleichlangen Zustreichelementen angeordnet, wobei sich die Zustreicher jeweils hinter dem mittleren Bereich zwischen je zwei Säscharen der hinteren Querreihe befinden. In einer derartigen Position der Zustreicher verrichten diese eine ausreichende Zustreicharbeit.

Bei dieser Drillmaschine ist es nun aber erforderlich, die Zustreichelemente immer genau in Bezug auf die Säschare einzustellen, soll eine befriedigende Zustreicharbeit erreicht werden. In der landwirtschaftlichen Praxis werden Drillmaschinen mit unterschiedlichen Reihenweiten zwischen den Säscharen eingesetzt, d.h. bei einigen Drillmaschinen sind die Säschare in größeren Abständen zueinander und bei anderen Drillmaschinen in kleineren Abständen zueinander, jeweils quer zur Fahrtrichtung gesehen, angeordnet. Die an der sich hinter den Säscharen befindlichen Schiene montierten Zustreicher sind also auf die entsprechende Reihenweite der jeweiligen Drillmaschine einzustellen, wodurch sich resultierend aus den mit unterschiedlichen Reihenweiten der Säschare ausgerüsteten Drillmaschine eine entsprechende Vielzahl von Schienen mit in unterschiedlichen Abständen montierten Zustreichern ergibt. Wird dann bei einer Drillmaschine eine Schiene mit nicht auf die entsprechende Reihenweite der Säschare eingestellten Zustreichern verwendet, werden die von den Säscharen erzeugten Säfurchen gar nicht bzw. nur in unzureichender oder ungleichmäßiger Weise zugestrichen, was eine mangelhafte Abdeckung der im Boden abgelegten Saatkörner mit Erde zur Folge hat.

Des weiteren ist durch die DE-PS 34 29 318 eine Drillmaschine bekannt, bei der die Anordnung und Ausbildung der Zustreichelemente an der Befestigungsschiene unter Vermeidung der vorab bei der durch die DE-PS 27 26 340 bekannten Drillmaschine geschilderten Nachteile verbessert und die Einstellung der Zustreichelemente wesentlich vereinfacht wird. Dieses wird dadurch erreicht, indem die Zustreicher jeweils ein kürzeres schräg angestelltes und ein längeres schräg angestelltes Zustreichelement aufweisen. Hierdurch können die an der Befestigungsschiene angeordneten Zustreicher gegenüber den Säscharen nun so eingestellt werden, daß sie mit nur einer Einstellung für verschiedene Reihenweiten der Säschare engesetzt werden können, so daß nur eine Ausführung von an Befestigungsschienen angeordneten Zustreichern für sämtliche Reihenweiten erforderlich ist. Somit werden in jedem Falle die von den Säscharen erzeugten Erdwälle eingeebnet und die im Boden abgelegten Saatkörner in jedem Fall mit Erde bedeckt.

Bei auf mit extrem mit Pflanzenresten bedeckten Bodenoberflächen kann es nun bei den beiden vorbeschriebenen Zustreichern vorkommen, daß diese Zustreicher im Bereich der Gabelstellen, wo jeweils die Zustreichelemente seitlich abgewinkelt sind und eng beieinander liegen, durch mitschleifende Pflanzenreste verstopft und die Zustreicharbeit hierdurch negativ beeinflußt wird. Des weiteren ist die Anordnung jeweils eines kürzeren und eines längeren Zustreichelementes oder zwei gleich-lange Zustreichelemente mit einer Gabelstelle für einen Zustreicher trotz seiner hervorragenden Zustreicharbeit als sehr aufwendig anzusehen.

Aus der EP-A2-01 71 705 ist es bekannt, an der Maschine Zustreicher einzusetzen, die jeweils ein kürzeres schräg angestelltes Zustreichelement und ein längeres schräg angestelltes Zustreichelement aufweisen. Auf jeder Seite zur Maschinenmitte kommen dabei Zustreicherelemente verschiedener Ausbildung und Anstellung zum Einsatz.

Gegenüber dem eingangs genannten Stand der Technik liegt der Erfindung die Aufgabe zugrunde, die Zustreicherkonstruktion zu vereinfachen und außerdem sicherzustellen, daß auch auf extrem mit Pflanzenresten bedecktem Bodenoberflächen verstopfungsunanfällig gearbeitet werden kann.

Gelöst wird diese Aufgabe bei einer Drillmaschine der gattungsgemäßen Art mit der im Kennzeichen des Anspruchs 1 beanspruchten Zustreicherausbildung.

Da die Zustreichelemente sämtlich seitlich der Mittellinie der Drillmaschine auf einer Seite angeordneter Zustreicher im gleichen Sinn schräg angestellt sind, ist es möglich, pro Seite mit Zustreichern nur eines einzigen Typs zu arbeiten, was die Lagerhaltung und die Fertigung vereinfacht. Dadurch, daß jeder Zustreicher nur ein schräg angestelltes Zustreicherelement aufweist, gibt es keine Abwinkelungen oder Zacken, an denen sich Pflanzenreste festsetzen könnten.

Bezüglich der Maschinenmitte können die zu beiden Seiten angeordneten Zustreicher entweder in dieselbe Richtung weisen oder aber entgegengesetzt.

So ist bei einer Ausführungsform vorgesehen, daß die Zustreichelemente in der linken Hälfte nach links weiserund in der rechten Hälfte nach rechts. Dabei ist dann weiter vorgesehen, daß die Zustreichelemente in der Mitte der Maschine in einem Abstand in Fahrtrichtung gesehen hintereinander angeordnet sind. Durch diese Ausführungen werden Seitenkräfte ausgeglichen, wenn die Zustreichelemente an einem Querbalken angeordnet sind.

Des weiteren ist erfindungsgemäß vorgesehen, daß die Wirkungsbereiche der Zustreichelemente sich zumindest annähernd überlappen. Hierdurch ist gewährleistet, daß sämtliche von den Säscharen erzeugten Erdwälle eingeebnet und die im Boden abgelegten Saatkörner in jedem Fall mit Erde bedeckt werden.

Damit nun ein gleichmäßiges Einebnen der von den Säscharen erzeugten Erdwälle über die gesamte Drillmaschinenbreite bei gleichzeitiger Saatgutbedeckung auf jeden Fall gewährleistet ist, ist erfindungsgemäß vorgesehen, daß das Zustreichelement zumindest eine Länge aufweist, die größer ist als der Reihenabstand der Säschare zueinander, hierbei ist erfindungsgemäß vorgesehen, daß das Zustreichelement zumindest eine Länge von 15 bis 20 cm aufweist. Eine derartige Länge der jeweiligen Zustreichelemente gewährleistet, daß sich die Zustreichelemente für sämtliche Reihenweiten einsetzen lassen, ohne daß eine Einstellung auf die jeweils vorliegende Reihenweite der Säschare durchgeführt werden muß.

Weitere Einzelheiten der Erfindung sind der Beispielsbeschreibung und den Zeichnungen zu entnehmen. Hierbei zeigt
Fig. 1 die erfindungsgemäß ausgerüstete Drillmaschine in der Seitenansicht,
Fig. 2 die Anordnung der erfindungsgemäßen Zustreicher in Prinzipdarstellung in der Draufsicht und
Fig. 3 die Anordnung erfindungsgemäßer Zustreicher in einer anderen Ausführung ebenfalls in Prinzipdarstellung und in der Draufsicht.

Die Drillmaschine ist mit einem Vorratsbehälter 1 und einem Rahmen ausgestattet, der sich im Betrieb über die Laufräder 2 auf der Bodenoberfläche 3 abstützt und an dem die Säschare 4 mit Hilfe der Scharhalter 5 in zwei hintereinander liegenden Querreihen 6 und 7 abwechselnd auf Lücke zueinander und in aufrechter Ebene schwenkbar angeordnet sind. Hinter den Säscharen 4 sind an der quer zur Fahrtrichtung 8 verlaufenden Schiene 9, die über die Stangen 10 an der Drillmaschine befestigt ist, die Zustreicher 11 angeordnet. Di unteren Kanten 11' der aus Federdraht mit rundem Querschnitt hergestellten Zustreicher 11 verlaufen in Betriebsstellung parallel zur Bodenoberfläche 3.

Die Zustreicher gemäß Fig. 2 weisen ein schräg nach hinten verlaufendes Zustreichelement 12 auf. Die an der Schiene 9 befindlichen Zustreicher 11 sind hierbei so ausgebildet, daß die Zustreichelemente 12 jeweils links der Mittellinie 13 der Drillmaschine nach links weisen und die Zustreichelemente 12 jeweils rechts der Mittellinie 13 nach rechts weisen. Hierbei sind die beiden Zustreichelemente 14 und 15, die jeweils in der Mitte der Maschine angeordnet sind, in einem Abstand in Fahrtrichtung 8 gesehen hintereinander angeordnet. Die einzelnen Zustreichelemente 12,14 und 15 sind wiederum derart an der Schiene 9 befestigt, daß sich ihre Wirkungsbereiche überlappen.

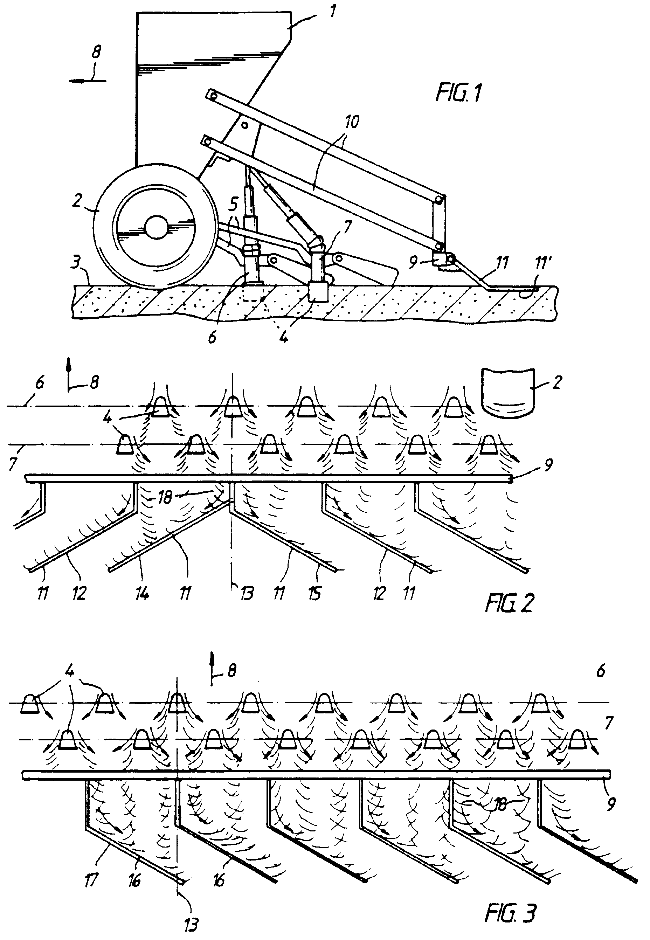

Die Fig. 3 zeigt ebenfalls an der Schiene 9 angeordnete Zustreicher 16, wobei die Zustreichelemente 17 die alle im gleichen Sinn schräg angestellt sind und zur einen Seite hinweisen.

Die Funktionsweise der Zustreicher 11 und 16 läßt sich folgendermaßen beschreiben:

Von den Säscharen 4 wird das Saatgut in den von den Säscharen 4 in den Boden gezogenen Säfurchen abgelegt. Hinter den Säscharen 4 bleiben die Säfurchen teilweise offen, so daß das Saatgut nicht mit Erde bedeckt ist.

Weiterhin erzeugen die Säschare 4 durch Schaffen der Säfurchen Erddämme 18. Diese Erddämme 18 werden von den Zustreichern 11 und 16 eingeebnet und die Erde dieser Erddämme 18 wird von den Zustreichern 11 und 16 derart verteilt, so daß die Saatkörner gleichmäßig mit Erde bedeckt werden.

## Patentansprüche

1. Drillmaschine mit Säscharen (4), die abwechselnd auf Lücke in zumindest zwei Querreihen (6, 7) angeordnet sind, mit hinter den Säscharen (4) angeordneten Zustreichern (11), die an Streben befindliche und nach hinten schräg zur Fahrtrichtung angestellte geradlinig verlaufende, Zustreichelemente (12, 14, 15) aufweisen, deren untere Kanten in Betriebsstellung zumindest annähernd parallel zur Bodenoberfläche verlaufen, dadurch **gekennzeichnet**, daß die Zustreichelemente (12, 14, 15) sämtlicher seitlich der Mittellinie (13) der Drillmaschine auf einer Seite angeordneter Zustreicher (11) im gleichen Sinn schräg angestellt sind daß jeder Zustreicher (11) nur ein schräg angestelltes Zustreichelement (12, 14, 15) aufweist, und daß die Wirkungsbereiche der Zustreichelemente (12, 14, 15, 17) sich zumindest annähernd überlappen.

2. Drillmaschine nach Anspruch 1, dadurch **gekennzeichnet**, daß sämtliche Zustreichelemente (17) zur einen Seite hin schräg angestellt sind.

3. Drillmaschine nach Anspruch 1, dadurch **gekennzeichnet**, daß die Zustreichelemente (12) in der linken Hälfte nach links weisen und die Zustreichelemente (12) in der rechten Hälfte nach rechts weisen.

4. Drillmaschine nach Anspruch 3, dadurch **gekennzeichnet**, daß die Zustreichelemente (14, 15) in der Mitte der Maschine in einem Abstand in Fahrtrichtung gesehen hintereinander angeordnet sind.

5. Drillmaschine nach einem oder mehreren der vorstehenden Ansprüche, dadurch **gekennzeichnet**, daß das Zustreichelement (12, 14, 15, 17) zumindest eine Länge aufweist, die größer ist als der Reihenabstand der Säschare (4) zueinander.

6. Drillmaschine nach einem oder mehreren der vorstehenden Ansprüche, dadurch **gekennzeichnet**, daß das Zustreichelement (12, 14, 15, 17) zumindest eine Länge von 15 bis 20 cm aufweist.

## Claims

1. Drill, including sowing coulters (4), which are disposed in at least two transverse rows (6,7) in an alternately staggered manner, including closing devices (11) which are disposed behind the sowing coulters (4) and have closing members (12,14,15) which are situated on struts and are orientated in a rearwardly inclined rectilinear manner relative to the direction of travel, the lower edges of said closing members extending at least approximately parallel to the ground surface in the operational position,
**characterised in that**
the closing members of all of the closing devices (11) which are disposed on one side laterally of the centre axis (13) of the drill, are inclinedly orientated in the same direction, each closing device (11) having only one inclinedly orientated closing member (12,14,15) and the effective ranges of action of the closing members (12,14,15,17) at least approximately overlap one another.

2. Drill according to claim 1,
**characterised in that**
the closing members (17) are inclinedly orientated towards one side.

3. Drill according to claim 1,
**characterised in that**
the closing members (12) in the left-hand half point towards the left, and the closing members (12) in the right-hand half point towards the right.

4. Drill according to claim 3,
**characterised in that**
the closing members (14,15) in the centre of the drill are disposed one behind the other, with a spacing therebetween, when viewed with respect to the direction of travel.

5. Drill according to one or more of the preceding claims,
**characterised in that**
the closing member (12,14,15,17) is at least of a length which is greater than the spacing between the rows of sowing coulters (4) relative to one another.

6. Drill according to one or more of the preceding claims,
**characterised in that**
the closing member (12,14,15,17) is at least of a length of 15 to 20cm.

## Revendications

1. Semoir équipé de socs (4) qui sont disposés en quinconce suivant au moins deux rangées transversales (6, 7) et des racloirs (11) prévus derrière les socs (4), racloirs ayant des éléments de raclage (12, 14, 15), rectilignes, portés par des entretoises et disposés en biais, à l'arrière par rapport à la direction de déplacement, racloirs dont l'arête inférieure est au moins pratiquement parallèle à la surface du sol lorsqu'ils sont en position d'utilisation,
semoir caractérisé en ce que
les éléments de raclage (12, 14, 15) de tous les racloirs (11) situés d'un même côté de la ligne médiane (13) du semoir, sont disposés en biais, dans la même direction, chaque racloir (11) ne comporte qu'un seul élément de raclage (12, 14, 15) disposé en biais et les plages d'action des éléments de raclage (12, 14, 15, 17) se chevauchent au moins partiellement.

2. Semoir selon la revendication 1,
caractérisé en ce que
tous les éléments de raclage (17) d'un même côté sont disposés en biais.

3. Semoir selon la revendication 1,
caractérisé en ce que
les éléments de raclage (12) de la moitié gauche sont tournés vers la gauche et les éléments de raclage (12) de la moitié droite sont dirigés vers la droite.

4. Semoir selon la revendication 3,
caractérisé en ce que
les éléments de raclage (14, 15) situés au milieu du semoir, sont disposés l'un derrière l'autre avec un certain intervalle dans la direction de déplacement.

5. Semoir selon une ou plusieurs des revendications précédentes,
caractérisé en ce que
les éléments de raclage (12, 14, 15, 17) ont au moins une longueur qui est supérieure à l'intervalle des rangées de soc (4).

6. Semoir selon une ou plusieurs des revendications précédentes,
caractérisé en ce que
les éléments de raclage (12, 14, 15, 17) possèdent au moins une longueur de 15 à 20 cm.
